# EUROPÄISCHE PATENTANMELDUNG

(11) **EP 1 511 145 A2**
(43) Veröffentlichungstag der Anmeldung: **02.03.2005**
(21) Anmeldenummer: 04018657.9
(22) Anmeldetag: 06.08.2004
(51) Int. Cl.: H02G 3/38

(54) **Im Bodenaufbau verlegbarer Kanal**

(30) Priorität: 26.08.2003 DE 20313160 U
(71) Anmelder: Tehalit GmbH, 67716 Heltersberg (DE)
(72) Erfinder: Kauf, Peter, 66482 Zweibrücken (DE); Schneckmann, Horst, 67705 Trippstadt (DE)
(74) Vertreter: Patentanwälte Möll und Bitterich

(57) **Zusammenfassung**

Gegenstand der Erfindung ist ein im Bodenaufbau (2, 3) verlegbarer Kanal (10) für Leitungsführung und Geräteeinbau. Das Unterteil verschwindet praktisch vollständig im Bodenaufbau. Auf den Kanal (10) ist ein Deckel (16) aufgerastet. Dieser besitzt an seiner dem Bodenbelag (3) zugewandten Längskante einen Überstand, der die Endkante des Bodenbelags (3) überlappt und so für einen sauberen, stolperfreien Abschluss sorgt. Im Inneren des Kanals (10) können zwei Abteile realisiert werden, von denen das eine elektrische Leitungen (8), das andere Elektro-Installationsgeräte (20) aufnimmt.

## Beschreibung

Die Erfindung betrifft im Bodenaufbau verlegbare Kanäle für Leitungsführung und Geräteeinbau gemäß dem Oberbegriff des Anspruchs 1.

Die EP 1 043 822 A offenbart einen Sockelleistenkanal für Leitungsführung und Geräteeinbau, der teilweise im Boden- und Wandaufbau versenkt ist. Dieser Sockelleistenkanal erfüllt die technischen Funktionen, bietet jedoch keinen gefälligen Anblick, so dass er für eine Verwendung in Wohnräumen und eleganten Büros eher ausscheidet.

Der vorliegenden Erfindung liegt die Aufgabe zugrunde, einen im Bodenaufbau verlegbaren Kanal anzugeben, der die volle technische Funktionalität mit einem ästhetisch ansprechenden, wenig auffälligen Design verbindet.

Diese Aufgabe wird gelöst durch einen Kanal mit den Merkmalen des Anspruchs 1.

Der wesentliche Vorteil der vorliegenden Erfindung ist die Tatsache, dass der Kanal insgesamt im Bodenaufbau versenkt ist, so dass nur der Deckel sichtbar ist. Dieser Deckel liegt bodengleich, überlappt jedoch dank seines seitlichen Überstandes die angrenzende Bodenbelagskante, wodurch sich zunächst ein sauberes Bild ergibt, gleichzeitig aber auch die Bodenbelagskante geschützt ist.

Gemäß einer bevorzugten Ausgestaltung der Erfindung besteht der Deckel aus Edelstahl.

Um Anschlussleitungen ohne Beschädigung aus dem Kanal herausführen zu können, ist im Deckel wenigstens eine Auslassöffnung vorgesehen. Die Deckel mit Auslassöffnung lassen sich unabhängig von den Geräten versetzen.

Zwecks optimaler Anpassung an den endgültigen Bodenaufbau empfiehlt es sich, höhenverstellbare Füße vorzusehen, mit deren Hilfe der Abstand zwischen Kanal und Rohboden fein justiert werden kann.

Schließlich kann im Kanal eine zusätzliche Trennwand vorgesehen sein. Diese Trennwand unterteilt den Kanalinnenraum in zwei Abteile und kann gleichzeitig den Deckel zusätzlich stützen.

Anhand der Zeichnung soll die Erfindung in Form eines Ausführungsbeispiels näher erläutert werden. Es zeigen
- Fig. 1: eine schematische Ansicht eines Boden- und Wandaufbaus mit darin verlegtem Kanal und
- Fig. 2: in vergrößerter, isometrischer Darstellung den Kanal.

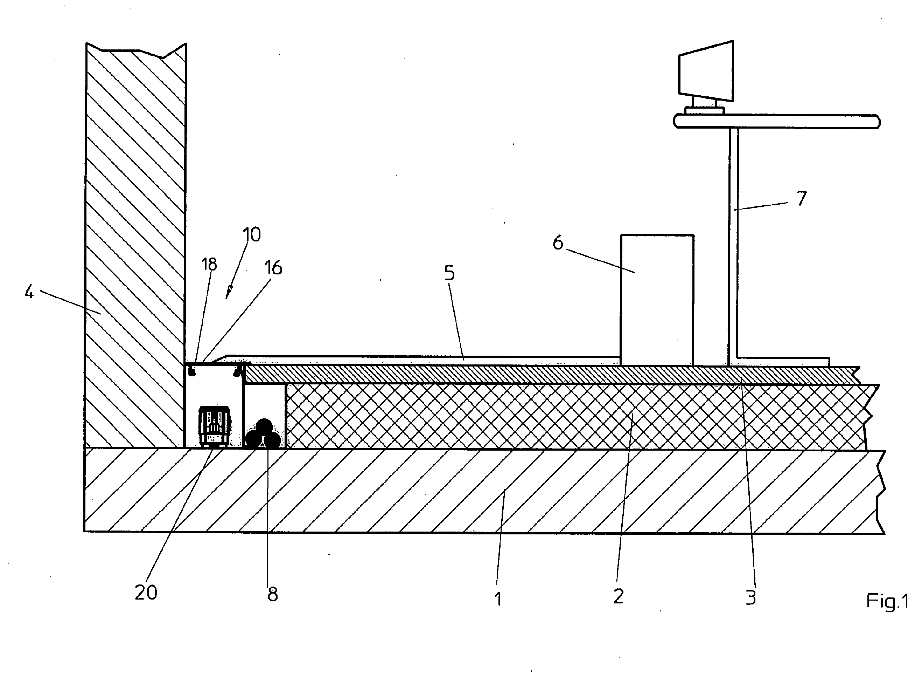

Fig. 1 zeigt rein schematisch einen Boden- und Wandaufbau. Man erkennt einen Rohboden 1, auf dem eine Wand 4 errichtet ist. Im Eck zwischen Rohboden 1 und Wand 4 ist ein Kanal 10 montiert. Der Kanal 10 verschwindet praktisch vollständig im Bodenaufbau, bestehend aus Estrich 2 und Bodenbelag 3, z. B. Parkett oder Teppichboden.

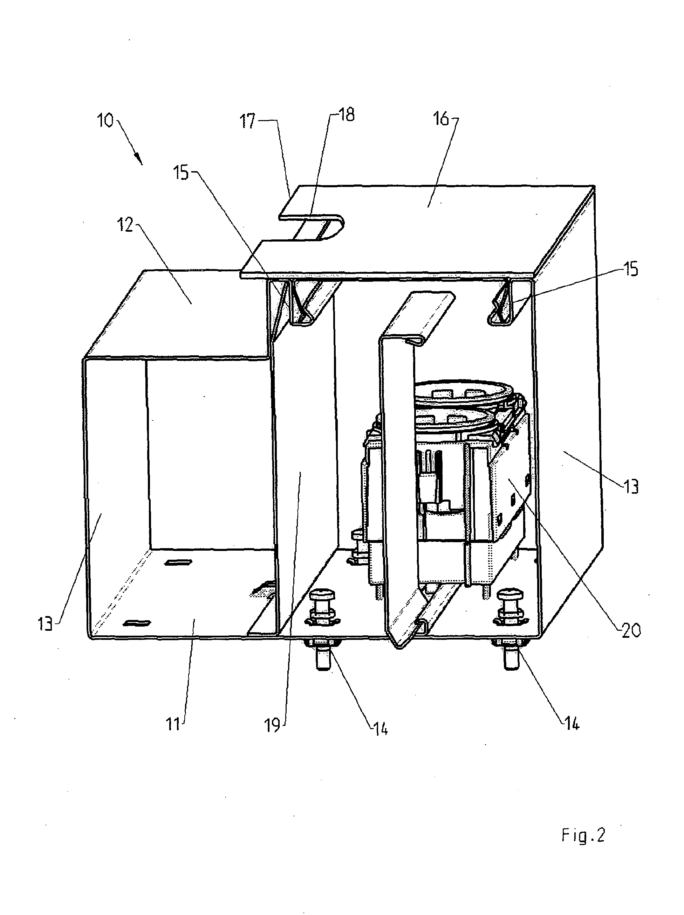

Im Kanal 10, dessen Einzelheiten anhand der Fig. 2 erläutert werden, ist ein Elektroinstallationsgerät 20, z. B. eine Steckdose untergebracht. Außerdem liegen im Kanal 10 Leitungen 8.

Von der Steckdose 20 führt eine Anschlussleitung in einem Aufbodenkanal 5 zu einem Computer 6, der unter einem Schreibtisch 7 steht. Auf diese Weise erhält man eine stolperfreie Leitungsführung.

Fig. 2 zeigt in isometrischer Darstellung den Kanal 10. Man erkennt einen Boden 11, zwei Seitenwände 13, ein festes Deckelteilstück 12 und Deckelhalteprofile 15 an den freien Kanten der Seitenwände 13. Eine zusätzliche Trennwand 19 unterteilt das Innere des Kanals 10 in zwei Kammern. Außerdem stützt die Trennwand 19 das innenliegende Deckelhalteprofil 15.

Auf die Deckelhalteprofile 15 ist ein Deckel 16 aufgerastet. Dieser besitzt an seiner dem Bodenbelag 3 zugewandten Längskante einen Überstand 17, der die Endkante des Bodenbelags 3 überlappt und so für einen sauberen, stolperfreien Abschluss sorgt.

Im Boden 11 des Kanals 10 sind höhenverstellbare Füße 14 vorgesehen, die eine feine Höhenjustierung auf der Baustelle ermöglichen.

Im Inneren des Kanals 10 ist als Beispiel für ein Elektro-Installationsgerät die Doppelsteckdose 20 montiert. Um an diese Anschlussleitungen (nicht dargestellt) anschließen zu können, ist im Deckel 16 ein Auslass 18, hier in Form eines einfachen halbrunden Ausschnitts, vorgesehen.

Es versteht sich, dass der Kanal 10 wegen der erforderlichen Stabilität aus Metall, insbesondere lackiertem Stahlblech besteht. Der im Gebrauch allein sichtbare Deckel 16 dagegen besteht wegen der besonderen Ästhetik bevorzugt aus Edelstahl.

## Patentansprüche

1. Im Bodenaufbau (2, 3) verlegbarer Kanal (10) für Leitungsführung und Geräteeinbau, im wesentlichen umfassend
- ein Unterteil (11, 12, 13, 15)
- und einen auf das Unterteil (11, 12, 13, 15) aufrastbaren Deckel (16), **gekennzeichnet durch** das Merkmal:
- der Deckel (16) besitzt einen seitlichen Überstand (17), der den Bodenaufbau (2, 3) überlappt.

2. Kanal nach Anspruch 1, **gekennzeichnet durch** das Merkmal:
- der Deckel (16, 17) besteht aus Edelstahl.

3. Kanal nach Anspruch 1 oder 2, **gekennzeichnet durch** das Merkmal:
- im Deckel (16) ist wenigstens ein Auslass (18) für Anschlussleitungen vorgesehen.

4. Kanal nach Anspruch 3, **gekennzeichnet durch** das Merkmal:
- der Deckel (16) mit Auslass (18) ist unabhängig versetzbar.

5. Kanal nach einem der Ansprüche 1 bis 4, **gekennzeichnet durch** das Merkmal:
- es sind höhenverstellbare Füße (14) vorgesehen.

6. Kanal nach einem der Ansprüche 1 bis 5, **gekennzeichnet durch** das Merkmal:
- es ist eine zusätzliche Trennwand (19) vorgesehen.
